# EUROPEAN PATENT SPECIFICATION

(11) **EP 2 505 902 B1**
(45) Date of publication and mention of the grant of the patent: **10.02.2016**
(21) Application number: 11181781.3
(22) Date of filing: 19.09.2011
(51) Int. Cl.: F16L 59/22

(54) **Shape tube for district heating heat pipe having shear control ring and the method thereof**
Formrohr für ein Fernwärmerohr mit Schersteuerungsring und Verfahren dafür
Tube formé pour tuyau de chauffage collectif doté d'un anneau de contrôle du cisaillement et procédé correspondant

(30) Priority: 30.03.2011 KR 20110028810
(43) Date of publication of application: 03.10.2012
(73) Proprietor: Korea District Heating Corp., Bundang-gu Seongnam-si, Gyeonggi-do 463-908 (KR)
(72) Inventor: Lee, Hoon, Gyeonggi-do (KR); Lim, Jong-Won, Gyeonggi-do (KR); Ko, Hyun-Il, Gyeonggi-do (KR); Cho, Chong-Du, Seoul (KR); Kim, Joo-Yong, Incheon-si (KR)
(74) Representative: Michalski Hüttermann & Partner Patentanwälte mbB

(56) References cited:
- WO-A2-2011/021882
- DE-A1- 3 345 371
- FR-A1- 2 522 112
- US-A- 2 041 911
- US-A- 5 031 665

## Description

### TECHNICAL FIELD

The present application relates to a shape tube for district heating heat pipe having shear control ring, more specifically, a shape tube for district heating heat pipe having shear control ring for dispersing shear stress, delivered to heat insulators, by applying shear control ring(SCR) to the curves of the internal pipe of curvedly bent heat pipes.

### BACKGROUND

In the 1920s, district heating system was first launched to overcome air pollution due to population growth in cities and save energy in Europe.

Heat pipes refer to heat transfer facilities for supplying heat for district cooling and heating and are used to deliver heat for district cooling and heating, generated in heat generation facilities, to user mechanical facilities.

Materials for district heating heat pipes were less effective by low insulation effect due to use of concrete duct in the 1920s, when the development of district heating was just started. However, in the 1960s, district heating system was started in earnest by developing factory manufactured insulated pipes and was distributed all over the world.

Heat supply pipes are currently used as dual insulated pipes, not single insulated pipes in the nation, and heat pipes are commonly used as dual insulated pipes for the reasons of insulation, economics, etc., referring to underground pipelines.

FR 2 522 112 refers to an insulated pipeline components are produced by positioning a steel pipe in the cavity of a casting mold with the pipe ends protruding therefrom. The dimensions of the cavity are greater than those of the inner pipe, and in the space between the inner pipe and the contact surfaces of the mold cavity a plastic powder is introduced, the powder being melted by heating of the mold. The mold is then rotated in a manner well known in rotational molding technique so that centrifugal force derives the molten plastic material against the contact surfaces of the mold cavity to form a plastic jacket; and after the mold has cooled the component is removed and expandable plastic material is supplied to the space between the inner pipe and the plastic jacket and is foamed. The resulting component has an exactly centered inner pipe, lacks conventional joints and can be produced at relatively low cost in a manner complying with industrial safety requirements.

DE 33 45 371 refers to a method for the subsequent insulation of a curve of a heat-insulated pipeline, a flexible hose is pushed over the end of one of the pipe sections which are to be connected, the inner pipes are welded to one another, and the hose is pushed over the connecting point until it rests on the enveloping pipes of both pipeline sections. The hose is held at a distance from the inner pipe by means of spacers which are seated on the inner pipe, and the space between the hose and the inner pipe is filled with foam.

US 5,031,665 refers to an insulated curved metal pipe having a curved body of a given length having a first section, a central section and an end section. The body has a monolithic refractory lining extending for the length of the body which is in contact with the internal surface of the first section and second section and which is spaced apart from the internal surface of the central section by a flexible insulating material, whereby the insulated curved pipe has greater flexibility (i.e., less stiffness) than otherwise possible when the cast refractory is in contact with the internal surface of the entire curved body. The curved pipe also includes a plurality of anchors attached to the internal surface of the curved body. Importantly, the anchors in the central section are sufficiently flexible to permit at least some deformation of the central section of the body relative to the refractory.

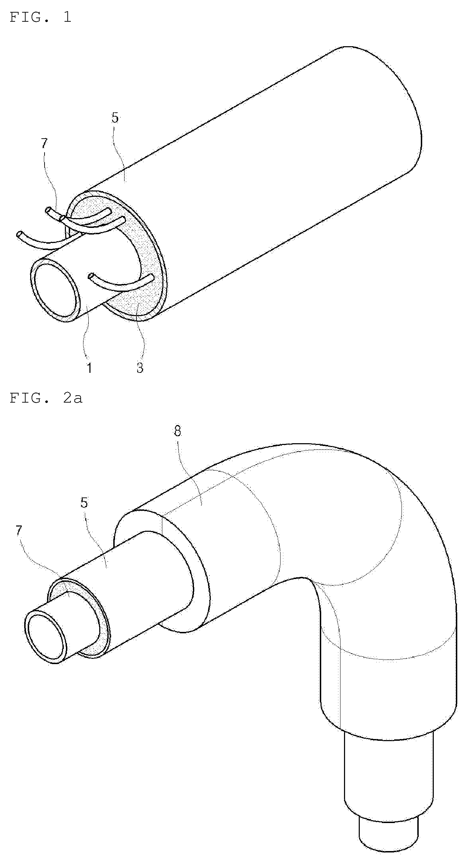

Fig. 1 illustrates the structure of general dual insulated pipes, comprising: internal pipe (1) made with steel; heat insulator(3) like polyurethane; external pipe(5) made with steel or synthetic resins; and leakage sensing line(7).

Since district heating industry was first introduced to the nation in the early 1980s, it has been remarkably developed in the quantitative or qualitative aspects for a short period. At this time, the appearance of housing problem, occurred by centralization of population in industrialization, and energy effectiveness, which comes from increase of the amount of energy, contributes to the spread of the district heating industry.

However, the field of heat pipes technology has not yet been reached to standardization worldwide. Moreover, since Korea has traditionally preferred intermittent heating of Korean floor heating system, the gap in temperature change of district heating water is big and thus, there is a difficulty in operating heat pipes.

Heat pipes, laid underground, generate transverse strain in the end of bends by working loads such as compressive force like temperature of medium-temperature hot water flowing inside steel pipe, expansive force by pressure, frictional force and reaction against external pipes and soil.

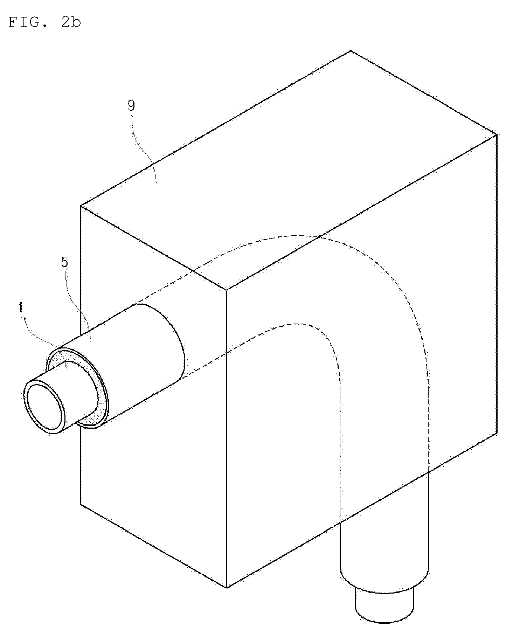

Particularly, it may be possible to cause damage occurred by force and displacement since shape tubes, bent with constant curvature, among fittings of heat pipes are the structurally weakest part when generating heat expansion by shape condition. Thus, to prevent this matter, as illustrated in Figs. 2a and 2b, newly-built absorber(foam pads)(8) or duct(9) is adhered to the external pipe (5) of shape tubes.

However, as times goes by, such newly-built absorbers are pressed by thermal expansion force and subgrade reaction, resulting in loss of their own functions. Thus, this comes to the reasons for the decrease of heat pipes' life, unstable structures, pipe damages, etc. Also, because of piping condition depending on ground or installed obstacles, it is inevitable that there would be space restriction. Therefore, installed ducts cause low practicality.

To solve such problems, stable development of heat pipes toward thermal expansion force have been rising without considering newly-built absorbers and ducts basically.

### DETAILED DESCRIPTION OF THE INVENTION

### TECHNICAL PROBLEM

To achieve the above request, the object of the present application is to provide a shape tube for district heating heat pipe having shear control ring for dispersing shear stress, delivered to a heat insulator, by applying shear control ring(SCR) to curves of the internal pipe of heat pipes bent with constant curvature.

### TECHNICALL SOLUTION

To achieve the above object, the present invention is characterized by comprising: an internal pipe, bent with constant curvature, connecting the district heating heat pipe and both ends and flowing medium-temperature hot water inside the internal pipe; an external pipe forming a space and inserting the internal pipe inside, having large diameter than that of the internal pipe; a heat insulator foamed in the space between the internal pipe and the external pipe; and a shear control ring combined to the curves of the internal pipe, wherein one shear control ring is installed to the center line(C1) of the curves.

Here, a spacer maintaining the above space when assembly is further comprised between the internal pipe and the external pipe.

Further, a leakage sensing line longitudinally installed between the internal pipe and the external pipe and fixed by the heat insulator is further comprised.

Furthermore, the shear control ring, made with metal, has an inside diameter which presses the internal pipe, and is installed by N-numbers.

Moreover, the N refers to odd numbers.

Additionally, when installing more than three shear control rings to the curves of the internal pipe, one of shear control rings is installed to the center line(C1) of the curves and the rest of shear control rings is formed toward any one point(P1), extended from the center line(C1) of the curves, having the same angle in both directions, respectively.

Further, the shear control ring has a height wherein the shear control ring is not contacted with the inner side of the external pipe.

Furthermore, the shear control ring is combined by TIG welding to the curves of the internal pipe.

Also, the method for manufacturing the shape tube for district heating heat pipe having shear control ring of the present invention comprises processes of: manufacturing the shear control ring having a diameter pressed in the external side of the internal pipe by cutting a hollow metal pipe or plate with a cutter; sticking the shear control ring by TIG welding after pressing the shear control ring in the curves of the internal pipe; assembling and inserting the internal pipe, to which the shear control ring is stuck, into the external pipe; and foaming the heat insulator by filling the heat insulator between the external pipe and the internal pipe.

Moreover, the sticking process further performs liquid penetrant non-destructive testing after sticking the shear control ring.

### EFFECT OF THE INVENTION

According to a shape tube for district heating heat pipe having shear control ring constituted as above, the effect is to prevent transform in heat pipes in advance by installing shear control rings in the curves of the internal pipe of heat pipes bent with constant curvature and dispersing shear stress, delivered to a heat insulator.

### BRIEF EXPLANATIONS OF DRAWINGS

Fig. 1 is a skew drawing showing the constitution of general heat pipe.
Figs. 2a and 2b are skew drawings showing the constitution of shape tube for general heat pipe.
Fig. 3 is a skew drawing showing the constitution of shape tube for district heating heat pipe having shear control ring.
Fig. 4 is a sectional drawing of Fig. 3.
Figs. 5a and 5b are side views showing the constitution of internal pipes of shape tube for district heating heat pipe having shear control ring according to the present invention.
Fig. 6 is a drawing showing the fluid flow in curved flow passages depending on dam in shape tubes for designing shear control rings according to the present invention.
Fig. 7 is a drawing regarding detailed modeling of bend comprising shear control rings.
Fig. 8 is a process flow diagram for explaining the process of manufacturing shape tubes for district heating heat pipes having shear control rings according to the present invention.

### TYPES FOR EXECUTION OF THE INVENTION

Hereinafter, an explanation of the method for constructing precast coping for bridge according to the present invention will be given with reference to the attached drawings.

A detailed explanation on the known functions and configurations related to this invention will be avoided for the brevity of the description. And, the terms as will be mentioned below are used by the functions defined in this invention, which is of course varied in accordance with the intension or rules of a user or operator. Therefore, the definition of the terms should be based upon the contents of the description of the invention.

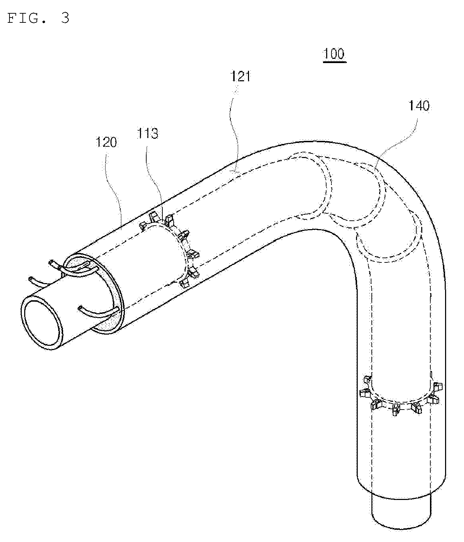

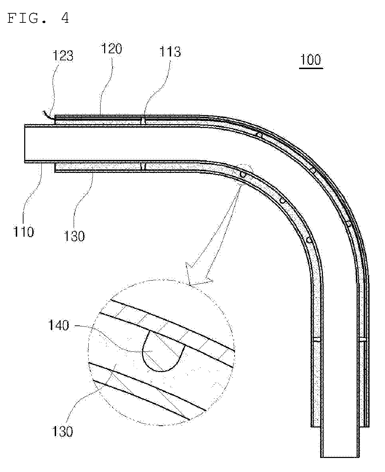

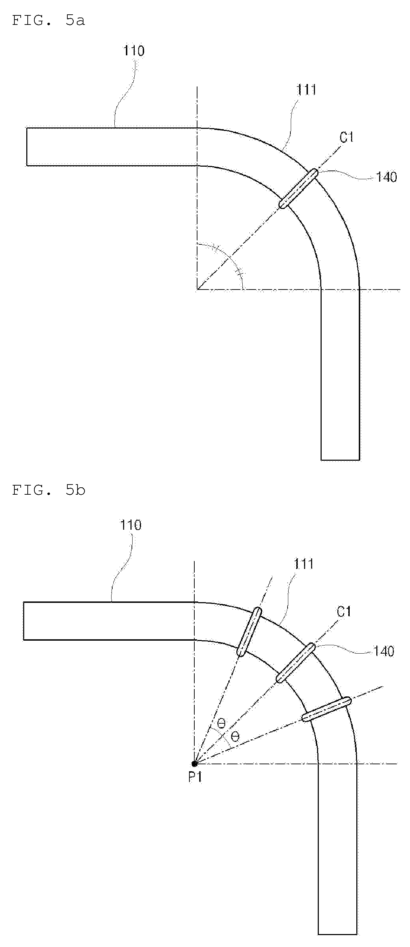

Fig. 3 is a skew drawing showing the constitution of shape tube for district heating heat pipe having shear control ring; Fig. 4 is a sectional drawing of Fig. 3; and Figs. 5a and 5b are side views showing the constitution of internal pipes of shape tube for district heating heat pipe having shear control ring according to the present invention.

Referring to Figs. 3 to 5b, a shape tube for district heating heat pipe having shear control ring according to the present invention comprises an internal pipe (110), an external pipe (120), a heat insulator(130), and a shear control ring (140).

First, the internal pipe (110), made with metal, comprises a curve (111) bent with constant curvature, wherein both ends are connected to the district heating heat pipes(not illustrated) and medium-temperature hot water is flowed into the inside. Here, it is desirable that the internal pipe (110) further includes a plurality of spacers (113) to external sides.

Further, the external pipe (120), made with metal or synthetic resins, has larger diameter than that of the internal pipe (110) for comprising a space (121) inside when inserting the internal pipe (110), wherein a gap is maintained by the spacer (113) with inserting the internal pipe (110) to the inside center. Here, the external pipe (120) further includes the leakage sensing line (123) longitudinally installed inside the external pipe (120) and fixed by the heat insulator (130).

Furthermore, the heat insulator (130), made with polyurethane foam, is filled in the space (121) between the external side of the internal pipe (110) and the internal side of the external pipe (120).

Meanwhile, the shear control ring (140), made with same or different metal comparing the internal pipe, is inserted to the curves (111) of the internal pipe (110) and is combined by TIG welding. The shear control ring (140) has an inner diameter which presses the internal pipe (110) and is installed by N-numbers(N=odd numbers). Here, as illustrated in Fig. 5a, the shear control ring (140) is installed in the center line (C1) of the curves (111) when installing one shear control ring to the curves (111) of the internal pipe (110). Further, as illustrated in Fig. 5b, when installing more than three shear control rings (140) to the curves (111) of the internal pipe (110), one of shear control rings is installed to the center line (C1) of the curves (111) and the rest of shear control rings is formed toward any one point (P1), extended from the center line (C1) of the curves (111), having the same angle (θ) in both directions, respectively. Furthermore, it is desirable that the shear control ring (140) has a height wherein the shear control ring is not contacted with the inner side of the external pipe (120).

The design of a shape tube for district heating heat pipe having shear control ring according to the present invention is detailedly explained by referring to enclosed drawings as follows:
The study on shape optimum design of the specifications of the shear control ring(SCR) according to the present invention was conducted.

First, the basic principle of the method for reducing maximum shear strength generated in the heat insulator by applying the shear control ring is illustrated and explained, and figures of optimum shear control ring for each pipe's diameter are calculated by applying Taguchi method, one of designs of experiment.

The basic principle for improving shear strength of the heat insulator by the shear control ring is as follows:
Heat pipes, laid underground, generate transverse strain in the end of bends by working loads such as compressive force like temperature of medium-temperature hot water flowing inside steel pipe, expansive force by pressure, frictional force and reaction against external pipes and soil. Under this condition, it is confirmed that the structurally weakest part of components of shape tubes is shear stress, and shear control rings are set up as one of shape tubes for solving this matter.

Although each object of the structural mechanics approaches, considering loads of members and stress or displacement, and the hydromechanics approach, considering fluid flow, pressure and speed, is different from those of structures and fluid, there may be similarity in laws of physics that the sum of energy is consistent under given conditions.

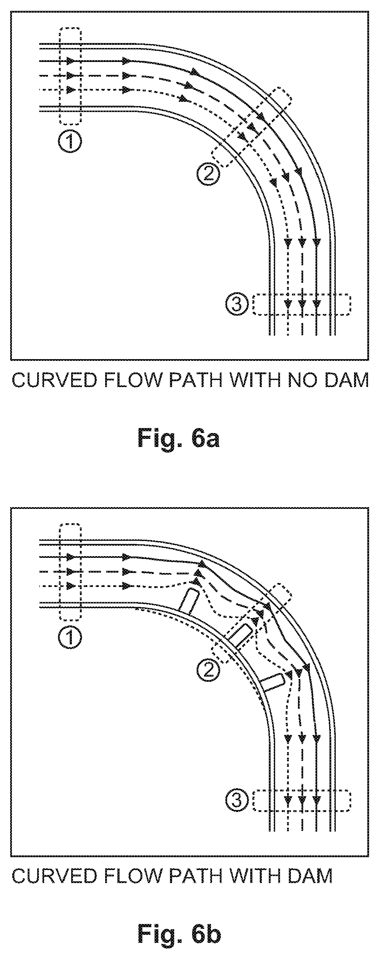

In the above aspect, curved flow passages such as (a) and (b) in Fig. 6 may be considered in order to explain the principle of the method for reducing shear stress applied to the heat insulator through application of the shear control ring suggested in the present invention. Fig. 6 is a drawing showing the fluid flow in curved flow passages depending on dam in shape tubes for designing shear control rings according to the present invention.

It is assumed that there is arbitrary fluid in flow path; the fluid slowly runs as much as the pressure focused by inertial force(centrifugal force) of the fluid itself may be ignored in curved sections for simplifying matters; and frictional force which applies to the boundary surface between the fluid and the flow path may be ignored.

Two cases are considered, one that there is no device which blocks the flow of the fluid in flow path, and the other that a dam, disturbing the fluid flow in curved flow passages, i.e., the shear control ring is installed.
(a) in Fig. 6 illustrates stream lines of fluid running in curved flow passages in which no dam is installed. According to basic hydrodynamic principles, it can be seen that fluid speed is radially constant in entrance point ① of flow path, and exit point ③ of flow path. Since there is no obstacle which blocks flow, the fluid running in a pipe has stream lines which are parallel to the shape of flow passages in any points, as indicated with arrow lines in the pipe. However, while passing through the curved flow passage, movement distance of one arbitrary point in the fluid is different because of 90 degree curved flow passages. That is, as for point ② running in the curved flow passage in (a) of Fig. 6, comparing dotted and broken stream lines in the innermost parts of the curved flow passage and continuous (non-broken) stream line in the outermost part of the curved flow passage, the dotted stream line has the slowest fluid speed (which means the shortest distance running in curved sections) and the speed becomes faster toward broken and continuous (non-broken)stream lines. When fluid speed passing through one arbitrary side like point ② becomes radially different, which means that each layer's speed is different, the size of shear force is determined by the difference of the slowest fluid speed and the fastest fluid speed when the shear force is applied to fluid. Therefore, if it may be possible to reduce the difference of the maximum/minimum value of fluid speed passing through arbitrary sides of curved sections, the shear force generated in the fluid may be reduced as long as the radial speed of fluid passing through arbitrary sides is constant.

As seen in (b) in Fig. 6, a dam disturbing fluid flow is installed in the curved section in flow passages. Although the installed dam changes flow conditions, the fluid speed in entrance point ① and exit point ③ is radially constant same as the condition with no dam under the condition that there is enough distance. Due to the installed dam, the stream line running in the pipe is not parallel to the shape of the flow passage and becomes twisted. Since the dam is installed inside the pipe, the dam is largely affected at a radially inward position while it is weakly affected at a radially outward position. That is, the radially-innermost dotted stream line is flowing through the most winding path and the stream line keeps the original shape in the outward direction. Since the length of the stream line is proportional to fluid speed, the speed of the radially-innermost fluid in curved section of flow path is increased by dam installment. That is, in case of flow path with no dam as shown in (a) of Fig. 6, the speed gap (length of stream line) of the radially-innermost dotted stream line and the radially-outermost continuous (non-broken) stream line is big in point ② and thus, the shear force is increased. However, in case of the dam installment as shown in (b) of Fig. 6, the speed gap of point ② is radially reduced by increase of speed (length of stream line) of the dotted stream line, and this reduces radial shear force of fluid applying to the side of the curved section.

The specifications of the shear control ring suggested in the present invention embody the above concepts structurally. Thus, the shear control ring reduces differences of shear force(fluid speed) distributed in the heat insulator (fluid) between steel pipes and external pipes (flow path). Further, the difference reduction of radial shear force enables to reduce shear stress distributed in the heat insulator.

Distribution of shearing stress of the heat insulator is compared depending on shear control rings according to the present invention.

The examples show effects of the shear control ring, illustrate structure analysis of the maximum shear stress of the heat insulator depending on installment of shear control rings for 125A diameters. As for the bend with no shear control ring, the maximum shear stress is radially generated inside (the part connected to the internal pipe), mainly formed in a thin area parallel to the curved shape of the bend. Meanwhile, with the shear control ring, it can be seen that the distribution of shear stress is dispersed by cutting the concentrated flow of shear stress simultaneously with widening the relatively high distribution area of shear stress. Also, it can be seen that the generation part of the maximum shear stress moves radially outwards from the parts, connected to the internal pipe and the heat insulator, to the parts, connected to the shear control ring and the heat insulator. Also, the design of experiment for optimizing the shape of the shear control ring is as follows:
The objective function of Taguchi method in the present invention is to minimize loss. First, several factors are selected to reduce loss in determining optimal condition of products or processes with using Taguchi method. Secondly, each factor is displayed on orthogonal tables; each level of factors is calculated; and the results are expressed and analyzed as signal-to-noise ratio. Consequentially, the finally selected level is determined as the optimal condition since it may be possible to analyze the level of each factor's influence for reducing loss. Specifically, four diameters such as 800A, 400A, 200A and 125A among currently used diameters are selected and analyzed.

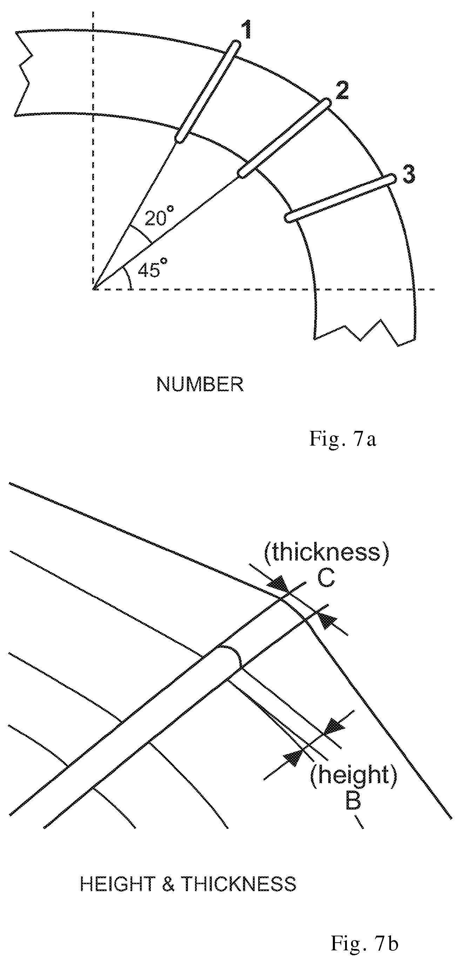

Fig. 7 is a drawing regarding detailed modeling of bend comprising shear control rings.

To find the optimal shape of the shear control ring using Taguchi method, number (A), height (B) and thickness (C) of the shear control ring are determined as factors and these are analyzed through three levels. The example of the applied shape is illustrated in Fig. 7 and application values generated on the basis of definitions and levels of factors, selected in Table 1, as below, are summarized. At this time, values depending on levels of each factor are selected, considering installable values in figure conditions of previous heat pipes. For instance, the height of the shear control ring is determined in consideration of restriction by shapes and sizes of the external pipe for each diameter.

**TABLE 1**

| DIAMETER | FACTOR | DEFINITION | LEVEL | | |
|---|---|---|---|---|---|
| | | | 1 | 2 | 3 |
| 800A | A | NUMBER(N0.) | 1 | 3 | 5 |
| | B | HEIGHT(mm) | 20 | 25 | 30 |
| | C | THICKNESS(mm) | 50 | 60 | 70 |
| 400A | A | NUMBER(NO.) | 1 | 3 | 5 |
| | B | HEIGHT(mm) | 20 | 25 | 30 |
| | C | THICKNESS(mm) | 25 | 30 | 35 |
| 200A | A | NUMBER(NO.) | 1 | 3 | 5 |
| | B | HEIGHT(mm) | 12 | 15.5 | 19 |
| | C | THICKNESS(mm) | 20 | 25 | 30 |
| 125A | A | NUMBER(NO.) | 1 | 3 | 5 |
| | B | HEIGHT(mm) | 10.5 | 14.0 | 17.5 |
| | C | THICKNESS(mm) | 15.0 | 20.0 | 25.0 |

The combination of every possible level for each diameter is 27; required degrees of freedom are 2; since the rectangular coordinate, chosen from Taguchi method, is limited, three factors (A, B, C) are displayed by selecting L₉(3⁴) orthogonal table in which maximum four factors may be displayed; and the rest is recorded and displayed as e(empty). The only influence on single factors is considered in the present invention and thus, the interaction among factors is not considered.

In conclusion, it can be seen that effects become increased as much as numbers and sizes of all factors in consideration of all diameters are big, and the key factor in reducing the maximum shear stress of the heat insulator among factors considered in all diameters is the number of the shear control ring. As for slight differences in contribution rates of height and thickness for each diameter, these differences are occurred by the level which may be manufactured when determining levels of factors.

The final specifications of the shear control ring bend determined through the Taguchi method is shown in Table 2.

**TABLE 2**

| DIAMETER | NUMBER. A (NO.) | HEIGHT. B (mm) | THICKNESS. C (mm) |
|---|---|---|---|
| 800A | 5 | 30 | 70 |
| 400A | 5 | 30 | 35 |
| 200A | 5 | 19 | 30 |
| 125A | 5 | 17.5 | 25 |

Table 3 summarizes the maximum shear stress and improvement rate of the bend specifications of optimum shear control ring suggested by the present specifications, applying foam pads, and the present invention. It is anticipated that the shear control ring has effects on strength improvement, reducing maximum shear stress of the heat insulator by 20% ~ 40% than the previous one.

**TABLE 3**

| | PUR SHEAR STRESS(MPa) | | IMPROVEMENT RATE (%) |
|---|---|---|---|
| DIAMETER | CURRENT SPECIFICATIONS APPLIED TO FOAM PAD | SPECIFICATIONS OF SHEAR CONTROL RING FROM WHICH FOAM PAD IS EXCLUDED | |
| 800A | 0.36 | 0.22 | -38.9 |
| 400A | 0.22 | 0.16 | -27.3 |
| 200A | 0.19 | 0.14 | -26.3 |
| 125A | 0.13 | 0.10 | -23.1 |

The process for manufacturing the shape tube for district heating heat pipe having control ring according to the present invention is detailedly explained by referring to the enclosed drawings as follows:

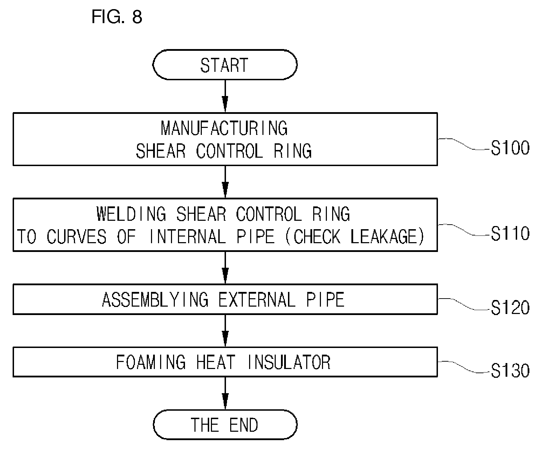

Fig. 8 is a process flow diagram for explaining the process of manufacturing shape tubes for district heating heat pipes having shear control rings according to the present invention. First, the shear control ring (140) having a diameter pressed in the external side of the internal pipe (110) is manufactured by cutting a hollow metal pipe or plate in accordance with the predesigned size with a cutter(S100).

Further, the shear control ring (140) is stuck by TIG welding after pressing the shear control ring in the curves (111) of the internal pipe (110) (S110). At this time, the curves (111) of the internal pipe (110) was preprocessed, and liquid penetrant non-destructive testing is further performed to check if there is a leakage after sticking the shear control ring (140).

Next, the internal pipe (110) attached to the shear control ring (140) is inserted and assembled to the external pipe (120) (S120). At this time, the external pipe (120) was already designed in the bent type to insert the internal pipe (110), and the spacer (113) and the leakage sensing line (123) are installed in the internal pipe (110).

Furthermore, the heat insulator (130) is filled and foamed between the external pipe (120) and the internal pipe (110) (S130).

While the invention has been shown and described with reference to certain preferred embodiments thereof, it will be understood by those skilled in the art that various changes in form and details may be made therein without departing from the scope of the invention as defined by the appended claims. Therefore, the scope of the invention is defined not by the detailed description of the invention but by the appended claims, and all differences within the scope will be construed as being included in the present invention.

**EXPLANATIONS OF REFERENCE NUMERALS**

| | | | |
|---|---|---|---|
| 110 : | internal pipe | 111 : | curve |
| 113 : | spacer | 120 : | external pipe |
| 121 : | space | 123 : | leakage sensing line |
| 130 : | heat insulator | 140 : | shear control ring |

## Claims

1. A shape tube for district heating heat pipe having shear control ring comprising: an internal pipe (110), bent with constant curvature, connecting the district heating heat pipe at both ends and flowing medium-temperature hot water inside the internal pipe; an external pipe (120) forming a space and inserting the internal pipe inside, having larger diameter than that of the internal pipe; a heat insulator (130) foamed in the space between the internal pipe and the external pipe; and at least a shear control ring (140) combined to the curve of the internal pipe, **characterised in that** one shear control ring (140) is installed to the center line (C1) of the curve.

2. The shape tube according to claim 1, wherein a spacer (113) maintaining the above space when assembled is further comprised between the internal pipe and the external pipe.

3. The shape tube according to claim 1 or 2, wherein a leakage sensing line (123) longitudinally installed between the internal pipe and the external pipe and fixed by the heat insulator is further comprised

4. The shape tube according to claims 1 to 3, wherein the shear control ring (140), made with metal, has an inside diameter which presses the internal pipe, and is installed by N-numbers.

5. The shape tube according to claims 1 to 4, wherein the N refers to odd numbers.

6. The shape tube according to claims 1 to 5, wherein when installing more than three shear control rings (140) to the curve of the internal pipe, one of shear control rings is installed to the center line (C1) of the curve and the rest of shear control rings is formed toward any one standard point (P1), extended from the center line (C1) of the curve, having the same angle in both directions, respectively.

7. The shape tube according to claims 1 to 6, wherein the shear control ring (140) has a height wherein the shear control ring is not contacted with the inner side of the external pipe.

8. The shape tube according to claims 1 to 7, wherein the shear control ring (140) is combined by TIG welding to the curve of the internal pipe.

9. Method for manufacturing the shape tube for district heating heat pipe having shear control ring of claims 1 to 8 comprising processes of: manufacturing the shear control ring (140) having a diameter pressed in the external side of the internal pipe (110) by cutting a hollow metal pipe or plate with a cutter; sticking the shear control ring by TIG welding after pressing the shear control ring in the curve of the internal pipe; assembling and inserting the internal pipe, to which the shear control ring is stuck, into the external pipe (120); and foaming the heat insulator (130) by filling the heat insulator between the external pipe and the internal pipe.

10. The method according to claim 9, wherein the sticking process further performs liquid penetrant non-destructive testing after sticking the shear control ring (140).

## Patentansprüche

1. Formrohr für Fernwärmerohr mit Schersteuerungsring, umfassend:
ein Innenrohr (110), das mit einer konstanten Krümmung gebogen ist und welches das Fernwärmerohr an beiden Enden verbindet und worin mittelwarmes Wasser innerhalb des Innenrohrs strömt;
ein Außenrohr (120), das einen Raum bildet, und Einführen des Innenrohrs darin, das einen größeren Durchmesser als das Innenrohr aufweist;
einen Wärmeisolator (130), der in den Raum zwischen dem Innenrohr und dem Außenrohr geschäumt wird; und
mindestens einen Schersteuerungsring (140), der mit der Krümmung des Innenrohrs kombiniert ist, **dadurch gekennzeichnet, dass** ein Schersteuerungsring (140) an der Mittellinie (C1) der Krümmung installiert ist.

2. Formrohr nach Anspruch 1, wobei ein Distanzstück (113) den oberen Raum beibehält, wenn der Aufbau ferner zwischen dem Innenrohr und dem Außenrohr enthalten ist.

3. Formrohr nach Anspruch 1 oder 2, wobei eine Leckerfassungsleitung (123) in Längsrichtung zwischen dem Innenrohr und dem Außenrohr installiert ist und vom Wärmeisolator weiter befestigt wird.

4. Formrohr nach einem der Ansprüche 1 bis 3, wobei der Schersteuerungsring (140), der aus Metall hergestellt ist, einen Innendurchmesser aufweist, der das Innenrohr drückt und von N-Zahlen installiert wird.

5. Formrohr nach einem der Ansprüche 1 bis 4, wobei sich das N auf ungerade Zahlen bezieht.

6. Formrohr nach einem der Ansprüche 1 bis 5, wobei, wenn mehr als drei Schersteuerungsringe (140) an der Krümmung des Innenrohrs installiert sind, einer der Schersteuerungsringe, der an der Mittellinie (C1) der Krümmung installiert ist, und die übrigen Schersteuerungsringe zu einer Standardstelle (P1), die sich von der Mittellinie (C1) der Krümmung erstreckt und den gleichen Winkel in beide Richtungen besitzt, ausgebildet sind.

7. Formrohr nach einem der Ansprüche 1 bis 6, wobei der Schersteuerungsring (140) eine Höhe besitzt, wobei der Schersteuerungsring nicht mit der Innenseite des Außenrohrs in Kontakt gebracht wird.

8. Formrohr nach einem der Ansprüche 1 bis 7, wobei der Schersteuerungsring (140) durch WIG-Schweißen mit der Krümmung des Innenrohrs verbunden wird.

9. Verfahren zur Herstellung des Formrohrs für ein Fernwärmerohr mit einem Schersteuerungsring nach einem der Ansprüche 1 bis 8, das die folgenden Prozesse umfasst:
Herstellen des Schersteuerungsrings (140), der einen Durchmesser aufweist, der in die Außenseite des Innenrohrs (110) durch Schneiden eines hohlen Metallrohrs oder -platte mit einer Schneidvorrichtung gedrückt wird;
Kleben des Schersteuerungsrings durch WIG-Schweißen nach dem Drücken des Schersteuerungsrings in die Krümmung des Innenrohres;
Zusammenbauen und Einführen des Innenrohres, in dem der Schersteuerungsring festsitzt, in das Außenrohr (120) ; und
Schäumen des Wärmeisolators (130) durch Füllen des Wärmeisolators zwischen dem Außenrohr und dem Innenrohr.

10. Verfahren nach Anspruch 9, wobei der Klebeprozess weiter einen nicht destruktiven Flüssigkeitsdurchdringungstest nach dem Kleben des Schersteuerungsrings (140) durchführt.

## Revendications

1. Tube façonné pour conduite de chaleur de chauffage d'îlot muni d'une bague de commande de cisaillement comprenant : un tube interne (110) courbé à une courbure constante, relié à la conduite de chaleur de chauffage d'îlot aux deux extrémités et à l'intérieur duquel s'écoule de l'eau chaude à température moyenne ; un tube externe (120) formant un espace et à l'intérieur duquel est inséré le tube interne, possédant un diamètre supérieur à celui du tube interne ; un isolant thermique (130) moussé dans l'espace entre le tube interne et le tube externe ; et au moins une bague de commande de cisaillement (140) combinée avec la courbure du tube interne, **caractérisé en ce qu'**une bague de commande de cisaillement (140) est installée sur la ligne centrale (C1) de la courbure.

2. Tube façonné selon la revendication 1, avec lequel une entretoise (113) qui maintient l'espace ci-dessus lorsqu'elle est assemblée est en outre comprise entre le tube interne et le tube externe.

3. Tube façonné selon la revendication 1 ou 2, avec lequel est en outre incluse une ligne de détection de fuite (123) qui est installée dans le sens longitudinal entre le tube interne et le tube externe et qui est fixée par l'isolant thermique.

4. Tube façonné selon les revendications 1 à 3, avec lequel la bague de commande de cisaillement (140), constituée de métal, possède un diamètre intérieur qui exerce une pression contre le tube interne et dont un nombre N est installé.

5. Tube façonné selon les revendications 1 à 4, avec lequel N fait référence à des nombres impairs.

6. Tube façonné selon les revendications 1 à 5, avec lequel, dans le cas de l'installation de plus de trois bagues de commande de cisaillement (140) sur la courbure du tube interne, l'une des bagues de commande de cisaillement est installée sur la ligne centrale (C1) de la courbure et le reste des bagues de commande de cisaillement est formé vers un quelconque point standard (P1) qui s'étend depuis la ligne centrale (C1) de la courbe, en ayant respectivement le même angle dans les deux directions.

7. Tube façonné selon les revendications 1 à 6, avec lequel la bague de commande de cisaillement (140) possède une hauteur dans laquelle la bague de commande de cisaillement n'est pas en contact avec le côté intérieur du tube externe.

8. Tube façonné selon les revendications 1 à 7, avec lequel la bague de commande de cisaillement (140) est combinée par soudage TIG à la courbure du tube interne.

9. Procédé de fabrication du tube façonné pour conduite de chaleur de chauffage d'îlot muni d'une bague de commande de cisaillement selon les revendications 1 à 8, comprenant les étapes suivantes : fabrication de la bague de commande de cisaillement (140) possédant un diamètre qui exerce une pression dans le côté externe du tube interne (110) en découpant un tube métallique creux ou une plaque avec un outil de coupe ; attachement de la bague de commande de cisaillement par soudage TIG après pressage de la bague de commande de cisaillement dans la courbure du tube interne ; assemblage et insertion du tube interne, auquel est attachée la bague de commande de cisaillement, dans le tube externe (120) ; et moussage de l'isolant thermique (130) en remplissant avec l'isolant thermique l'espace entre le tube externe et le tube interne.

10. Procédé selon la revendication 9, selon lequel l'étape d'attache comprend en outre un essai non destructif de pénétration de liquide après avoir attaché la bague de commande de cisaillement (140).
